# EUROPÄISCHE PATENTSCHRIFT

(11) **EP 3 224 109 B1**
(45) Veröffentlichungstag und Bekanntmachung des Hinweises auf die Patenterteilung: **17.03.2021**
(21) Anmeldenummer: 15778690.6
(22) Anmeldetag: 13.10.2015
(51) Int. Cl.: B61F 5/32

(54) **RADSATZFÜHRUNG FÜR EIN SCHIENENFAHRZEUG**
WHEELSET GUIDE FOR A RAIL VEHICLE
GUIDE D'ESSIEU MONTÉ POUR VÉHICULE FERROVIAIRE

(30) Priorität: 27.11.2014 AT 508572014
(43) Veröffentlichungstag der Anmeldung: 04.10.2017
(73) Patentinhaber: Siemens Mobility Austria GmbH, 1210 Wien (AT)
(72) Erfinder: SEIFRIED, Radovan, 2000 Maribor (SI); RACKL, Hugo, 8046 Stattegg (AT)
(74) Vertreter: Deffner, Rolf
(86) Internationale Anmeldenummer: PCT/EP2015/073648
(87) Internationale Veröffentlichungsnummer: WO 2016/083009

(56) Entgegenhaltungen:
- EP-A2- 2 557 016
- DE-B- 1 146 093
- FR-A- 923 115

## Beschreibung

### Technisches Gebiet

Die Erfindung betrifft eine Radsatzführung für ein Schienenfahrzeug
- mit einem Fahrwerksrahmen eines Drehgestelles, umfassend zumindest einen Längsträger,
- mit einem Radsatzlager für einen Radsatz des Schienenfahrzeuges, welches Radsatzlager über ein Federelement federnd mit dem Fahrwerksrahmen verbunden ist und eine Schwinge aufweist,
- wobei die Schwinge über ein elastisches Schwingenlager und einen durch das Schwingenlager geführten Bolzen schwenkbar an den Fahrwerksrahmen angebunden ist.

### Stand der Technik

Im Bereich der Schienenfahrzeuge sind Radsatzführungen bekannt, deren Aufgabe es ist die Radsätze funktionssicher in einem Drehgestell zu führen. Eine Ausführungsform einer Radsatzführung stellt die Lenkerführung durch eine Schwinge dar, auch bekannt als Schwingenführung. In dieser Bauform ist ein Radsatzlager einerseits über ein Federelement, beispielsweise eine Primärfeder des Schienenfahrzeuges, mit dem Fahrwerksrahmen des Drehgestelles verbunden. Andererseits ist das Radsatzlager mit einer Schwinge verbunden, welche über ein elastisches Schwingenlager wiederum am Fahrwerksrahmen angebunden ist. Durch eine gummigefederte Verbindung der Schwinge mit dem Fahrwerksrahmen kann die Schwingenführung neben Zug- und Druckkräften auch Schwingungen übertragen.

Gemäß dem Stand der Technik umfasst die Schwinge an dem dem Radsatz gegenüberliegenden Ende ein Auge in welchem das Schwingenlager angeordnet ist. Durch das Schwingenlager ist ein Bolzen geführt, dessen Endbereiche in einer Aufnahme des Fahrwerkrahmens aufgenommen werden, um die Verbindung zwischen Radsatzlager und Fahrwerksrahmen herzustellen. Die Aufnahme am Fahrwerksrahmen ist üblicher Weise als Konsolen-Paar gestaltet, welche an der Unterseite des Fahrwerksrahmens an beiden Seiten des Schwingenlagers angeordnet sind. Durch diese Anordnung erfolgt die Krafteinleitung in den Fahrwerksrahmen mittels Schwinge über die Konsolen in Richtung der Radsatzachse gesehen vor bzw. hinter dem Schwingenlager selbst. Dadurch wird nicht der zentrale Bereich des Fahrwerkrahmens, beispielsweise eines Längsträgers des Fahrwerkrahmens, belastet, sondern die Kraft wird nur in den seitlichen Bereichen eingeleitet.

Während eine solche Gestaltung bei Fahrwerksrahmen bzw. Längsträgern mit geschlossenen Querschnitten, beispielsweise bei verschweißten Kastenträgern, keine negativen Effekte bedingt, da die Kraft durch die seitliche Einleitung in den Untergurt direkt von den Seitenwänden des geschlossenen Profils aufgenommen wird, so wirkt sich diese Ausführungsvariante insbesondere bei Fahrwerksrahmen bzw. Längsträgern mit offenen Profilen, beispielsweise I-Trägern, äußert negativ aus.

Durch die Einleitung der Kraft in die seitlichen Bereiche des Untergurtes muss dieser verstärkt werden, um einer hohen Biegebeanspruchung entgegen zu wirken, welche auftritt, da der Steg bezogen auf die Richtung der Radsatzachse mittig zwischen Obergurt und Untergurt angeordnet ist und die seitlichen Bereiche ein relativ geringes Widerstandsmoment gegen Biegung aufweisen. Wird eine Schwinge der zuvor beschriebenen Form an einen Fahrwerksrahmen bzw. Längsträger angebunden, so müssen der Steg und der Untergurt eine Ausnehmung aufweisen, um Platz für die Schwinge und das Schwingenlager zu schaffen, was weitere festigkeits- und stabilitätstechnische Nachteile, wie erhebliche Steifigkeitssprünge und Krümmungen, nach sich zieht.

Aus dem Stand der Technik ist beispielsweise die DE 11 46 093 B bekannt, in welcher ein Achslenker für Schienenfahrzeuge beschrieben ist, welcher gummigefederte Achslager aufweist, wobei an jeweils beiden Seiten dieser Achslager Gummifedern vorgesehen sind. Der Achslenker weist Lenkerarme auf, welche über eine Buchsen-Bolzen-Verbindung mit einem Bolzen und einer als Schwingenlager ausgebildeten Gummi-Metall-Buchse miteinander verbunden und in einem Fahrwerksrahmen gelagert sind.

### Aufgabe der Erfindung

Es ist daher eine Aufgabe der Erfindung die Nachteile des Stands der Technik zu überwinden und eine Radsatzführung vorzuschlagen, welche eine hinsichtlich der Festigkeit und Stabilität verbesserte Anbindung der Schwinge auch an einen Fahrwerksrahmen bzw. Längsträger mit offenem Profil ermöglicht.

### Darstellung der Erfindung

Diese Aufgabe wird durch eine Radsatzführung mit den Merkmalen des Patentanspruchs 1 gelöst. Vorteilhafte Ausgestaltungen der Erfindung sind in den jeweiligen abhängigen Ansprüchen definiert.

Die Erfindung betrifft eine Radsatzführung für ein Schienenfahrzeug
- mit einem Fahrwerksrahmen eines Drehgestelles, umfassend zumindest einen Längsträger,
- mit einem Radsatzlager für einen Radsatz des Schienenfahrzeuges, welches Radsatzlager über ein Federelement federnd mit dem Fahrwerksrahmen verbunden ist und eine Schwinge aufweist,
- wobei die Schwinge über ein elastisches Schwingenlager und einen durch das Schwingenlager geführten Bolzen schwenkbar an den Fahrwerksrahmen angebunden ist, wobei der Fahrwerksrahmen eine Aufnahme für das Schwingenlager ausbildet, welche derart gestaltet ist, dass die Krafteinleitung in den Fahrwerksrahmen über das Schwingenlager selbst erfolgt und dass das Schwingenlager in der Aufnahme positioniert ist. Durch die Einleitung der Kraft über das Schwingenlager selbst, wird diese zentral in den Fahrwerksrahmen eingeleitet, sodass ein günstiger Belastungsfall gegeben ist
- die ungünstige Einleitung ausschließlich seitlich des Schwingenlagers ist damit ausgeschlossen. Dementsprechend weist das Seitenprofil des Fahrwerksrahmens keine erheblichen Steifigkeitssprünge oder Krümmungen auf, was zusätzliche Vorteile betreffend das Gesamtgewicht und die Herstellungskosten des Fahrwerkrahmens bedingt Erfindungsgemäß ist vorgesehen, dass ein Untergurt des zumindest einen Längsträgers im Bereich der Aufnahme an der Aufnahme tangential vorbei geführt ist bzw. tangential in den Bereich ein- und ausmündet, wobei der Längsträger ein I-förmiges Profil aufweist.

Um eine optimale Anbindung des Schwingenlagers an den Fahrwerksrahmen zu gewährleisten und eine Kontaktfläche zwischen Aufnahme und Schwingenlager zu vergrößern, sieht eine Ausführungsvariante der Erfindung vor, dass die Aufnahme das Schwingenlager zumindest teilweise umschließt.

Gemäß einer weiteren Ausführungsvariante einer erfindungsgemäßen Radsatzführung ist die Aufnahme als eine, vorzugsweise zylindrische, Ausnehmung im Längsträger ausgebildet. Der Längsträger ist jener Teil des Fahrwerkrahmens mit welchem die Schwinge üblicherweise verbunden ist. Zur Krafteinleitung direkt über das Schwingenlager im zentralen Bereich des Längsträgers ist die Ausbildung der Aufnahme als Ausnehmung besonders vorteilhaft, da so über das in der Ausnehmung aufgenommene Schwingenlager Zug- und Druckkräfte sowie Schwingungen in jeder Richtung optimal in den Längsträger eingeleitet werden können. Die Lochleibung der Ausnehmung kontaktiert das Schwingenlager dabei vollflächig. Die Ausnehmung weist dabei eine Längsachse auf, welche vorteilhafter Weise parallel zur Radsatzachse ausgerichtet ist.

Dabei ist es auch denkbar, dass die Aufnahme als ein rohrförmiges Element ausgebildet ist, welches in den Längsträger integriert ist und dessen Achse parallel zur Radsatzachse verläuft. Das rohrförmige Element erstreckt sich dabei vorzugsweise über 90%, besonders bevorzugt über 100%, der Abmessung des Längsträgers in Richtung der Radsatzachse, wobei der Innendurchmesser des rohrförmigen Elementes der Ausnehmung entspricht. Die Wandstärke des rohrförmigen Elementes ist dabei in der Regel größer als die Stärke des Längsträgers selbst, z.B. größer als die Dicke des Stegs des Längsträgers mit I-förmigen Profil.

Der Längsträger weist ein I-förmiges Profil auf. Durch diese erfindungsgemäße Gestaltung der Aufnahme kann eine festigkeitsoptimierte Radsatzführung erreicht werden. Dabei durchbricht die Ausnehmung bevorzugt den Steg des I-Profils, ohne den Untergurt zu verletzen. Der Untergurt selbst ist im Bereich der Ausnehmung gegenüber den Abmessungen im Rest des Längsträgers verstärkt.

Eine bevorzugte Ausführungsvariante einer erfindungsgemäßen Radsatzführung sieht vor, dass die Krafteinleitung in den Längsträger über zumindest einen Kontaktabschnitt der Kontaktfläche zwischen Schwingenlager und Aufnahme erfolgt. Durch das Anordnen des elastischen Schwingenlagers in der als Ausnehmung im Längsträger gestalteten Aufnahme entsteht eine Kontaktfläche zwischen der Leibung der Aufnahme und dem Umfang des Schwingenlagers. Ein Kontaktabschnitt dieser Kontaktfläche kann dabei eine besondere geometrische Form aufweisen, um den Großteil der Kraft zu übertragen. Bevorzugt ist die gesamte Mantelfläche des Schwingenlagers als Kontaktabschnitt ausgebildet. Über diesen Kontaktabschnitt ist nun, je nach Richtung der Krafteinleitung, also ob Zug- oder Druckkräfte bzw. Schwingungen übertragen werden, die Kraft zentral und direkt in den Längsträger einleitbar. Die Richtung der Kraft bestimmt dabei welcher Bereich des Kontaktabschnittes besonders beansprucht ist, also über welchen Abschnitt der Mantelfläche des Schwingenlagers der Großteil der Kraft in den Längsträger eingeleitet wird.

Um das elastische Schwingenlager robust und konstruktiv einfach zu gestalten, ist in einer weiteren bevorzugten Ausführungsvariante der Erfindung vorgesehen, dass das elastische Schwingenlager als eine Gummi-Metall-Buchse ausgebildet ist. Die Gummi-Metall-Buchse besteht dabei aus einer Innenhülse, durch welcher der Bolzen geführt ist, einer die Innenhülse umgebenden Elastomerschicht, vorzugsweise Gummi-Schicht, und einer die Elastomerschicht umgebenden Außenhülse. Eine Relativbewegung zwischen Innen- und Außenhülse ist dabei durch die dazwischenliegende Elastomerschicht gefedert bzw. gedämpft. Es ist dabei auch denkbar, dass Gummi-Metall-Buchsen ohne Innenhülse vorgesehen sind, wobei bei einer solchen Ausführungsvariante der Bolzen direkt mit der Elastomerschicht verbunden ist.

Nach dem Stand der Technik erfolgt der Kraftfluss vom Radsatzlager über die Schwinge in das Schwingenlager und von dort über den Bolzen an die außenliegende Aufnahme, üblicherweise Konsolen. Da somit die Krafteinleitung in den Längsträger über die Konsolen in seitlichen Bereichen des Längsträgers erfolgt, ist dieser Kraftfluss nicht vorteilhaft. Daher ist in einer weiteren bevorzugten Ausführungsvariante einer erfindungsgemäßen Radsatzführung vorgesehen, dass der Kraftfluss von dem Radsatzlager in den Fahrwerksrahmen über die Schwinge, den Bolzen und das Schwingenlager verläuft. Durch den Kraftfluss vom Bolzen in das Schwingenlager, kann die einzuleitende Kraft effektiv zentriert werden, sodass eine zentrale Einleitung in den Fahrwerksrahmen bzw. Längsträger möglich ist.

Verläuft der Kraftfluss über den Bolzen in das Schwingenlager, so weist der Bolzen gemäß einer weiteren bevorzugten Ausführungsvariante einen zentralen Abschnitt zur Aufnahme in das Schwingenlager und zumindest einen Endabschnitt zur Anbindung an die Schwinge auf, wobei die Krafteinleitung von der Schwinge in den Bolzen über den zumindest einen Endabschnitt des Bolzens erfolgt und wobei die Krafteinleitung vom Bolzen in das Schwingenlager über den zentralen Abschnitt des Bolzens erfolgt. So wird in konstruktiv einfacher Art und Weise sichergestellt, dass der Kraftfluss im Schwingenlager gebündelt wird, sodass die Krafteinleitung über das in der Aufnahme positionierte Schwingenlager direkt in den Fahrwerksrahmen erfolgt.

Zur Optimierung der Verbindung zwischen Bolzen und Schwinge sieht eine besonders bevorzugte Ausführungsvariante der Erfindung vor, dass die Schwinge einen gabelartigen Abschnitt zur Aufnahme von zwei Endabschnitten des Bolzens aufweist. Der gabelartige Abschnitt ist dabei so gestaltet, dass die Schwinge in diesem Abschnitt zwei voneinander in Richtung der Radsatzachse beabstandete und parallele Kontaktelemente umfasst. Die Kontaktelemente weisen dabei jeweils Aufnahmemittel zur Aufnahme der Endabschnitte des Bolzens auf, welche Aufnahmemittel beispielsweise als Ausnehmung oder Bohrung gestaltet sein können.

Um die Übertragung von Schwingungen und Kräften zu verbessern bzw. die dämpfende/federnde Wirkung des elastischen Schwingenlagers voll ausnützen zu können, ist in einer weiteren bevorzugten Ausführungsvariante einer erfindungsgemäßen Radsatzführung vorgesehen, dass die Endabschnitte des Bolzens torsionssteif mit dem gabelartigen Abschnitt der Schwinge verbunden sind. Eine solche Verbindung kann beispielsweise hergestellt werden, indem die Endabschnitte des Bolzens einen kreissegmentartigen Querschnitt aufweisen und ein Klemmelement mit ebenem Klemmabschnitt an dem Aufnahmemittel fixiert ist, welches im Eingriff mit der ebenen Fläche des Endabschnittes des Bolzens steht. Durch den Kontakt des ebenen Klemmabschnittes mit der ebenen Fläche des Bolzens ist eine Relativbewegung zwischen Bolzen und Aufnahmemittel nicht mehr möglich.

Da der gabelartige Abschnitt der Schwinge zwei Kontaktelemente aufweist, welche voneinander beabstandet sind und das Schwingenlager in der Aufnahme am Fahrwerksrahmen, vorzugsweise am Längsträger, positioniert ist, ist eine besonders platzsparende Verbindung der Schwinge mit dem Schwingenlager bzw. mit dem durch das Schwingenlager geführten Bolzen dann möglich, wenn die Kontaktelemente des gabelartigen Endabschnittes den Fahrwerksrahmen bzw. Längsträger seitlich, also in Richtung der Radsatzachse gesehen vor und hinter der Aufnahme, im Bereich des Schwingenlagers umgreifen. Daher ist in einer weiteren Ausführungsvariante der Erfindung vorgesehen, dass der gabelartige Endabschnitt der Schwinge den Fahrwerksrahmen, vorzugsweise den Längsträger, zumindest teilweise seitlich umgreift.

Gemäß einer weiteren bevorzugten Ausführungsvariante der Erfindung ist das Schwingenlager in die Aufnahme eingepresst oder eingeklebt. Beide Montagevarianten haben spezifische Vorteile. So wird durch Einpressen in einfacher Art und Weise eine kraftschlüssige Verbindung hergestellt und durch Einkleben die Ausbildung von Einpressrillen verhindert.

In einer weiteren besonders bevorzugten Ausführungsvariante einer erfindungsgemäßen Radsatzführung ist vorgesehen, dass der Bolzen eine Längsachse und das Radsatzlager eine Radsatzachse aufweist und dass die Längsachse und die Radsatzachse parallel zueinander ausgerichtet sind. Die parallele Ausrichtung der beiden Achsen ermöglicht ein kinematisch optimiertes Zusammenspiel der entsprechenden Schwenk- und Federbewegungen während des Betriebs.

In einem Drehgestell eines Schienenfahrzeuges in dem eine Primärfeder zur federnden Verbindung zwischen Fahrwerksrahmen und Radsatzlager vorgesehen ist, ist gemäß einer weiteren Ausführungsvariante der Erfindung vorgesehen, dass es sich bei dem Federelement der Radsatzführung um eine Primärfeder des Schienenfahrzeuges handelt.

In einer im Betrieb befindlichen erfindungsgemäßen Radsatzführung ist ein Radsatz in dem Radsatzlager geführt. Der Radsatz umfasst dabei in der Regel zwei Räder und eine die beiden Räder starr verbindende Radachse. Die Räder stehen dabei im Eingriff mit den Schienen.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Die Figuren sind als beispielhaft zu verstehen und sollen den Erfindungscharakter zwar darlegen, ihn aber keinesfalls einengen oder gar abschließend wiedergeben. Es zeigen:
- Fig. 1: eine axonometrische Ansicht einer Radsatzführung gemäß dem Stand der Technik
- Fig. 2: eine Prinzip-Schnittdarstellung eines Schwingenlagers gemäß dem Stand der Technik
- Fig. 3: eine axonometrische Ansicht einer erfindungsgemäßen Radsatzführung
- Fig. 4: eine Prinzip-Schnittdarstellung eines erfindungsgemäßen Schwingenlagers
- Fig. 5: eine Unteransicht einer erfindungsgemäßen Radsatzführung
- Fig. 6: eine detaillierte Schnittdarstellung eines erfindungsgemäßen Schwingenlagers in axonometrischer Ansicht

### Ausführung der Erfindung

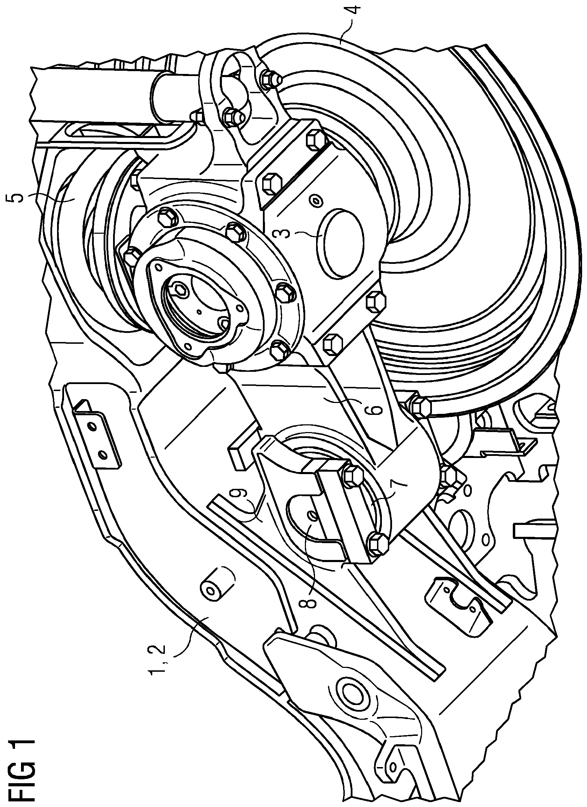

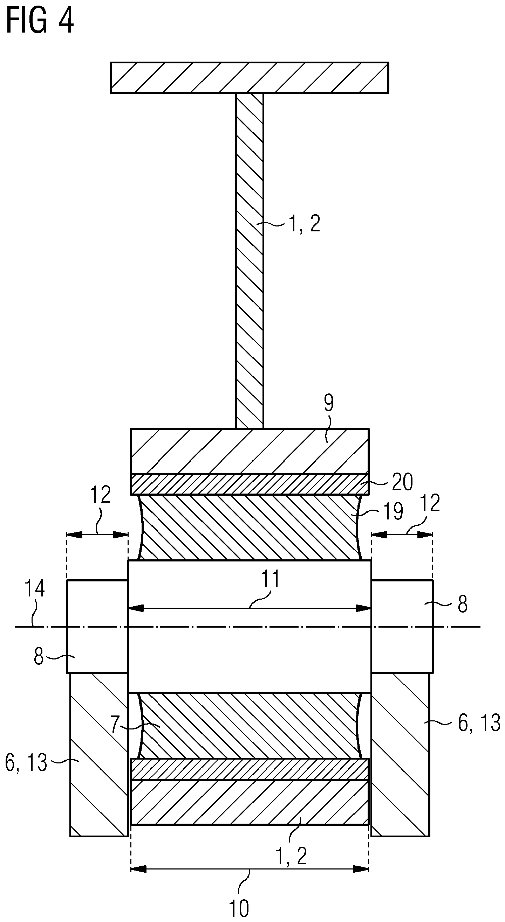

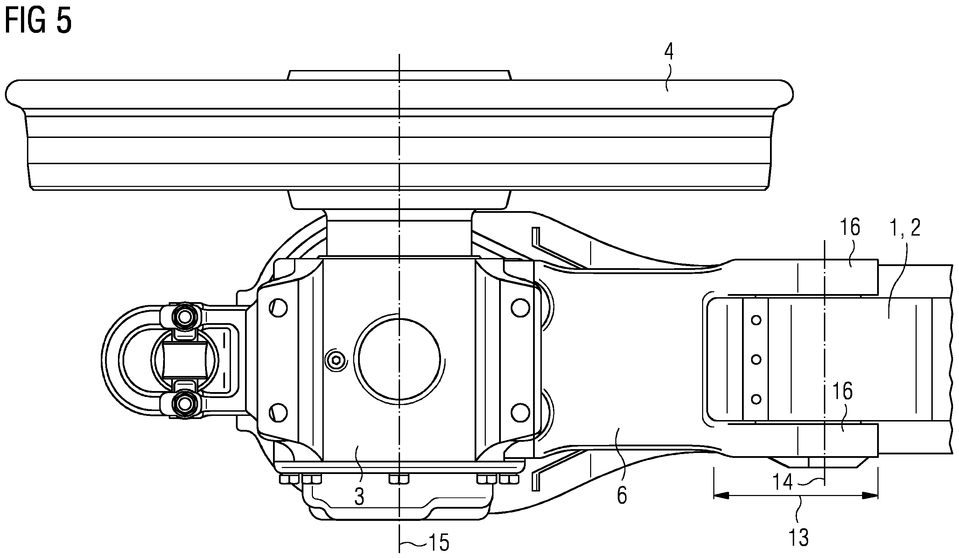

Figur 1 zeigt einen Fahrwerksrahmen 1, genauer einen Längsträger 2 eines Fahrwerkrahmens 1 mit kastenförmigem Profil, mit einer Radsatzführung in der Bauform einer Schwingenführung gemäß dem Stand der Technik. Die Radsatzführung umfasst dabei ein Radsatzlager 3, welches mittels Federelement 5 gegen den Längsträger 2 abgestützt ist und einen Radsatz 4 trägt, wobei in dieser Figur lediglich ein Rad des Radsatzes 4 abgebildet ist. Zusätzlich dazu ist das Radsatzlager 3 mit einer Schwinge 6 verbunden, wobei die Schwinge 6 an dem dem Radsatzlager 3 gegenüberliegenden Ende ein Auge aufweist, in welchem Auge ein elastisches Schwingenlager 7 angeordnet ist. Durch das Schwingenlager 7 ist ein Bolzen 8 geführt, welcher mit einer am Längsträger 2 angeordneten Aufnahme 9 in Form zweier, bezogen auf eine Längsachse 14 des Bolzens 8 (siehe Fig. 4 und 5) vor und hinter dem Auge angeordneten, Konsolen.

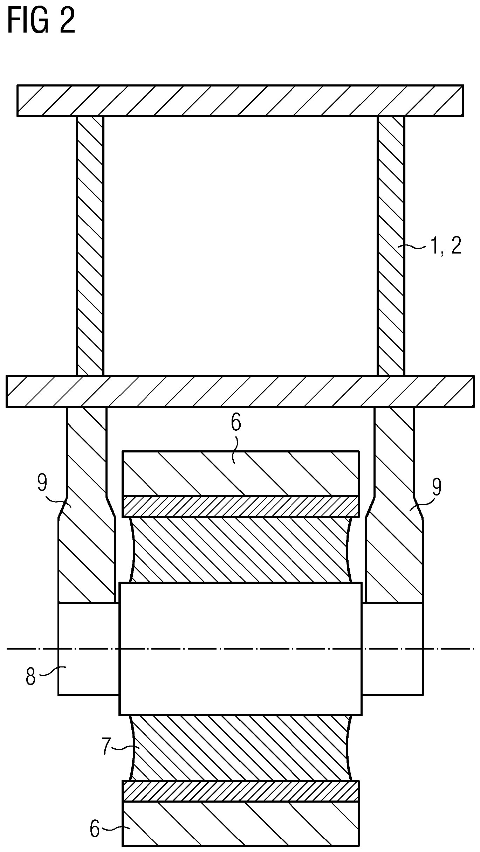

Aus dem in Figur 2 dargestellten Schnitt durch das elastische Schwingenlager 7 und den Längsträger 2 wird noch deutlicher, dass das Schwingenlager 7 im Auge der Schwinge 6 positioniert ist und die Krafteinleitung in den Längsträger 2 mit kastenprofilförmigem Querschnitt über den Bolzen 8 und die mit dem Bolzen 8 verbundene Aufnahme 9 in Form von zwei Konsolen erfolgt. Dadurch wird die Kraft im Wesentlichen in den seitlichen Bereichen des Längsträgers 2 eingeleitet und dort von den Seitenwänden des Längsträgers 2 aufgenommen.

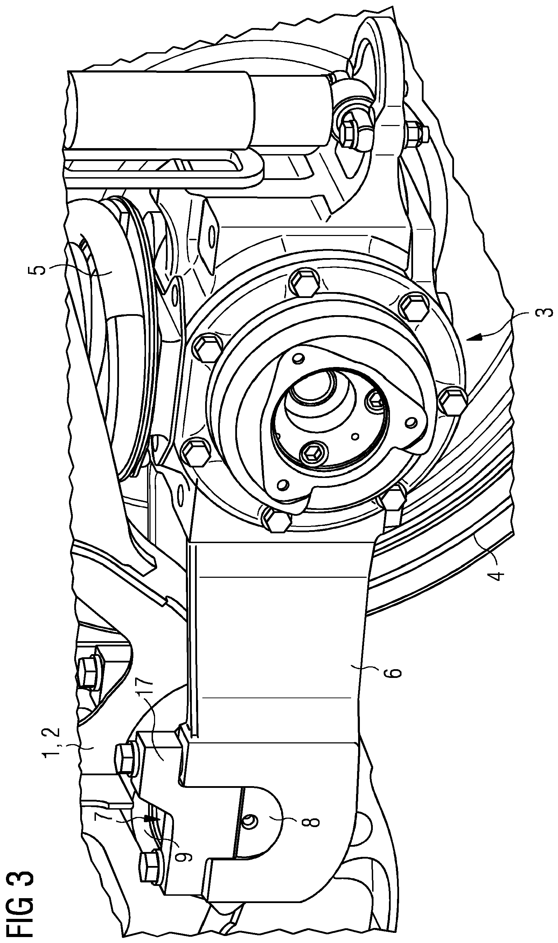

In Figur 3 ist eine erfindungsgemäße Radsatzführung abgebildet. Der prinzipielle Aufbau entspricht weitestgehend dem Stand der Technik. Das Radsatzlager 3 ist einerseits mittels Federelement 5 federnd mit dem Fahrwerksrahmen 1 bzw. Längsträger 2 verbunden und andererseits über die Schwinge 6 und das elastische Schwingenlager 7 am Längsträger 2 angebunden. Beim Federelement 5 handelt es sich dabei um die Primärfeder des Schienenfahrzeuges. Ebenfalls ist zu erkennen, dass im Radsatzlager 3 ein Radsatz 4 geführt ist, welcher zwei Räder und eine die Räder starr verbindende Achse umfasst, wobei nur eines der Räder sichtbar ist.

Im Unterschied zum Stand der Technik, bildet der Längsträger 2 eine Aufnahme 9 in Form einer, vorzugsweise zylindrischen, Ausnehmung aus, in welcher Aufnahme 9 das Schwingenlager 7 positioniert ist. Die Aufnahme 9 wird dabei durch ein rohrförmiges Element ausgebildet, welches in den Längsträger 2 integriert ist. Die Ausnehmung wir dabei durch den Innendurchmesser des rohrförmigen Elementes ausgebildet. Die Verbindung des Schwingenlagers 7 mit der Aufnahme 9 erfolgt entweder durch Einpressen oder Einkleben des Schwingenlagers 7 in die Aufnahme 9. Dabei umschließt die Aufnahme 9 das Schwingenlager 7 komplett. Durch die Anordnung des Schwingenlagers 7 in der Aufnahme 9 erfolgt die Krafteinleitung in den Fahrwerksrahmen 1 durch das Schwingenlager 7 selbst.

Durch das Schwingenlager 7 ist der Bolzen 8 geführt, welcher mit der Schwinge 6 verbunden ist, wie nachfolgend detailliert beschrieben. Der Kraftfluss verläuft dabei vom Radsatzlager 3, über die Schwinge 6, den Bolzen 8, das Schwingenlager 7 und die Aufnahme 9 in den Längsträger 2.

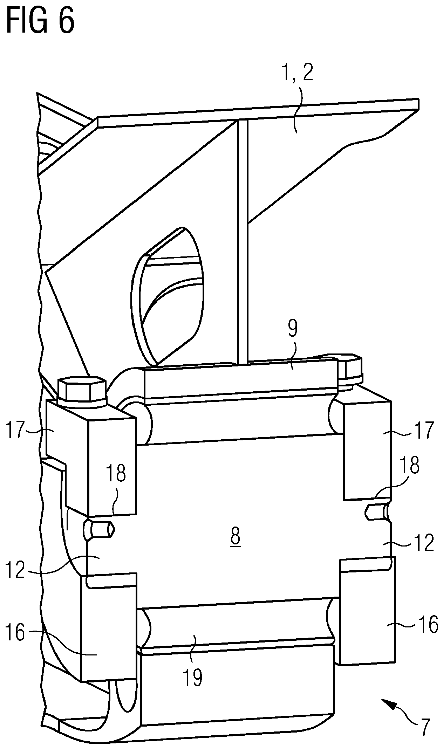

In Figur 4 ist wiederum eine Prinzip-Schnittdarstellung durch den Fahrwerksrahmen 1 bzw. den Längsträger 2 abgebildet. Dieser zeigt einerseits deutlich das I-förmige Profil des Längsträgers 2 und andererseits die durch den Längsträger 2 ausgebildete Aufnahme 9, in welcher das Schwingenlager 7 angeordnet ist. Der Untergurt des Längsträgers 2 fällt in dieser Prinzipdarstellung mit der Begrenzung der Aufnahme 9 zusammen, was einen Ausnahmefall darstellt. Üblicherweise ist der Untergurt im Bereich der Aufnahme 9 nicht unterbrochen, sondern an der Aufnahme 9 tangential vorbei geführt (siehe Fig. 6). Auch zeigt diese Figur, dass der Bolzen 8 zwei Endabschnitte 12 aufweist, welche jeweils an den Enden des Bolzens 8 angeordnet sind. Diese Endabschnitte 12 stehen in Verbindung mit der Schwinge 6, genauer gesagt mit einem gabelartigen Abschnitt 13 der Schwinge 6, über welche die Krafteinleitung in den Bolzen 8 erfolgt. Des Weiteren weist der Bolzen 8 einen zentralen Abschnitt 11 auf, welcher im Schwingenlager 7 aufgenommen und zwischen den beiden Endabschnitten 12 angeordnet ist. Über diesen zentralen Abschnitt 11 erfolgt die Krafteinleitung vom Bolzen 8 in das Schwingenlager 7.

Das Schwingenlager 7 kann dabei, wie abgebildet, aus einer Elastomerschicht 19 bestehen, welche auf den zentralen Abschnitt 11 des Bolzens 8 aufvulkanisiert oder aufgepresst ist. Diese Elastomerschicht 19 ist auf der Außenseite in eine Hülse 20 eingepresst oder einvulkanisiert, welche Hülse 20 in der Aufnahme 9 gelagert ist. Alternativ kann auch eine Gummi-Metall-Buchse als Schwingenlager 7 dienen, bei der die Hülse 20 einer äußeren Hülse entspricht und die Elastomerschicht 19 zwischen einer inneren Hülse und der äußeren Hülse einvulkanisiert ist, wobei die innere Hülse auf den Bolzen 8 aufgepresst ist.

Zwischen dem Schwingenlager 7 respektive der Hülse 20 und der Aufnahme 9 bildet sich eine Kontaktfläche aus, welche im vorliegenden Fall der Lochleibung der als zylindrische Ausnehmung ausgebildeten Aufnahme 9 entspricht. Ein Kontaktabschnitt 10 entspricht in diesem Fall der Kontaktfläche selbst. Je nach Richtung der eingeleiteten Kraft oder Schwingung wird ein anderer Teil des Schwingenlagers 7 stärker belastet.

Figur 5 zeigt eine Ansicht einer erfindungsgemäßen Radsatzführung von unten, also aus Richtung einer Schiene gesehen. Diese Figur zeigt insbesondere den gabelartigen Abschnitt 13 der Schwinge 6, welcher auf dem dem Radsatzlager 3 gegenüberliegenden Ende der Schwinge 6 angeordnet ist. Dieser gabelartige Abschnitt 13 umfasst zwei Kontaktelemente 16, welche parallel zueinander angeordnet sind und in Richtung der Längsachse 14 des Bolzens 8 voneinander beabstandet sind, um die Aufnahme 9 des Längsträgers 2 bzw. das darin gelagerte Schwingenlager 7 aufnehmen zu können. Dabei umgreift der gabelartige Abschnitt 13 bzw. umgreifen die Kontaktelemente 16 den Längsträger 2 seitlich im Bereich der Aufnahme 9. Der Bolzen 8 und das Radsatzlager 3 sind dabei so ausgerichtet, dass die Längsachse 14 des Bolzens 8 und die Radsatzachse 15 parallel zueinander verlaufen.

Figur 6 zeigt eine Schnittdarstellung durch ein Schwingenlager 7 gemäß dem in den Figuren 3 und 5 erläuterten Ausführungsbeispiel. Die Endabschnitte 12 des Bolzens 8 überragen das Schwingenlager 7 entlang der Längsachse 14 beidseitig und werden von den Kontaktelementen 16 des gabelartigen Abschnittes 13 der Schwinge 6 aufgenommen. Zu diesem Zweck weisen die Kontaktelemente 16 ein als Ausnehmung ausgebildetes Aufnahmemittel auf, in der jeweils ein Endabschnitt 12 des Bolzens 8 aufgenommen ist. Um eine torsionssteife Verbindung zwischen Bolzen 8 und gabelartigem Abschnitt 13 herzustellen weisen die Endabschnitte 12 des Bolzens 8 einen kreissektor-förmigen Querschnitt auf. Die Ausnehmung an den Kontaktelementen 16 ist halbkreisförmig ausgebildet und wird auf der entgegengesetzten Seite durch ein Klemmelement 17 (siehe auch Fig. 3) begrenzt. Ein Klemmabschnitt 18 des Klemmelementes 17 steht dabei im Eingriff mit der ebenen Fläche des Endabschnittes 12, welche aus dem kreissektor-förmigen Querschnitt resultiert. Das Klemmelement 17 ist mit entsprechenden Mitteln am Kontaktelement 16 fixiert, im vorliegenden Ausführungsbeispiel mittels zweier Schraubenverbindungen.

Auch ist in dieser Figur zu erkennen, dass der Untergurt des Längsträgers 2 im Bereich der Aufnahme 9 an eben der Aufnahme 9 vorbei geführt ist bzw. tangential in den Bereich ein- und ausmündet. Dadurch ist die Wandstärke der Aufnahme 9 (bzw. der Aufnahme 9 plus Untergurt) im Bereich des Untergurtes des Längsträgers 2 deutlich größer als die Wandstärke der Aufnahme 9 auf der gegenüberliegenden Seite des Bolzens 8. Die Wandstärke der Aufnahme 9 (bzw. der Aufnahme 9 plus Untergurt) ist im Bereich des Untergurtes des Längsträgers 2 auch größer als die Dicke des Obergurts des Längsträgers 2.

### Bezugszeichenliste:

- 1: Fahrwerksrahmen
- 2: Längsträger
- 3: Radsatzlager
- 4: Radsatz
- 5: Federelement
- 6: Schwinge
- 7: Schwingenlager
- 8: Bolzen
- 9: Aufnahme
- 10: Kontaktabschnitt
- 11: zentraler Abschnitt des Bolzens 8
- 12: Endabschnitt des Bolzens 8
- 13: gabelartiger Abschnitt der Schwinge 6
- 14: Längsachse des Bolzens 8
- 15: Radsatzachse
- 16: Kontaktelement
- 17: Klemmelement
- 18: Klemmabschnitt des Klemmelementes 17
- 19: Elastomerschicht
- 20: Hülse

## Patentansprüche

1. Radsatzführung für ein Schienenfahrzeug
- mit einem Fahrwerksrahmen (1) eines Drehgestelles, umfassend zumindest einen Längsträger (2),
- mit einem Radsatzlager (3) für einen Radsatz (4) des Schienenfahrzeuges, welches Radsatzlager (3) über ein Federelement (5) federnd mit dem Fahrwerksrahmen (1) verbunden ist und eine Schwinge (6) aufweist,
- wobei die Schwinge (6) über ein elastisches Schwingenlager (7) und einen durch das Schwingenlager (7) geführten Bolzen (8) schwenkbar an den Fahrwerksrahmen (1) angebunden ist, wobei der Fahrwerksrahmen (1) eine Aufnahme (9) für das Schwingenlager (7) ausbildet, welche derart gestaltet ist, dass die Krafteinleitung in den Fahrwerksrahmen (1) über das Schwingenlager (7) selbst erfolgt und dass das Schwingenlager (7) in der Aufnahme (9) positioniert ist, **dadurch gekennzeichnet, dass** ein Untergurt des zumindest einen Längsträgers (2) im Bereich der Aufnahme (9) an der Aufnahme (9) tangential vorbei geführt ist bzw. tangential in den Bereich ein- und ausmündet,
wobei der Längsträger (2) ein I-förmiges Profil aufweist.

2. Radsatzführung nach Anspruch 1, **dadurch gekennzeichnet, dass** die Aufnahme (9) das Schwingenlager (7) zumindest teilweise umschließt.

3. Radsatzführung nach Anspruch 1 oder 2, **dadurch gekennzeichnet, dass** die Aufnahme (9) als eine, vorzugsweise zylindrische, Ausnehmung im Längsträger (2) ausgebildet ist.

4. Radsatzführung nach Anspruch 3, **dadurch gekennzeichnet, dass** die Krafteinleitung in den Längsträger (2) über zumindest einen Kontaktabschnitt (10) der Kontaktfläche zwischen Schwingenlager (7) und Aufnahme (9) erfolgt.

5. Radsatzführung nach einem der Ansprüche 1 bis 4, **dadurch gekennzeichnet, dass** das elastische Schwingenlager (7) als eine Gummi-Metall-Buchse ausgebildet ist.

6. Radsatzführung nach einem der Ansprüche 1 bis 5, **dadurch gekennzeichnet, dass** der Kraftfluss von dem Radsatzlager (3) in den Fahrwerksrahmen (1) über die Schwinge (6), den Bolzen (8), das Schwingenlager (7) und die Aufnahme (9) verläuft.

7. Radsatzführung nach Anspruch 6, **dadurch gekennzeichnet, dass** der Bolzen (8) einen zentralen Abschnitt (11) zur Aufnahme in das Schwingenlager (7) und zumindest einen Endabschnitt (12) zur Anbindung an die Schwinge (6) aufweist, wobei die Krafteinleitung von der Schwinge (6) in den Bolzen (8) über den zumindest einen Endabschnitt (12) des Bolzens (8) erfolgt und wobei die Krafteinleitung vom Bolzen (8) in das Schwingenlager (7) über den zentralen Abschnitt (11) des Bolzens (8) erfolgt.

8. Radsatzführung nach einem der Ansprüche 1 bis 7, **dadurch gekennzeichnet, dass** die Schwinge (6) einen gabelartigen Abschnitt (13) zur Aufnahme von zwei Endabschnitten (12) des Bolzens (8) aufweist.

9. Radsatzführung nach Anspruch 8, **dadurch gekennzeichnet, dass** die Endabschnitte (12) des Bolzens (8) torsionssteif mit dem gabelartigen Abschnitt (13) der Schwinge (6) verbunden sind.

10. Radsatzführung nach Anspruch 8 oder 9, **dadurch gekennzeichnet, dass** der gabelartige Endabschnitt (13) der Schwinge (6) den Fahrwerksrahmen, vorzugsweise den Längsträger (2), zumindest teilweise seitlich umgreift.

11. Radsatzführung nach einem der Ansprüche 1 bis 10, **dadurch gekennzeichnet, dass** das Schwingenlager (7) in die Aufnahme (9) eingepresst ist.

12. Radsatzführung nach einem der Ansprüche 1 bis 10, **dadurch gekennzeichnet, dass** das Schwingenlager (7) in die Aufnahme (9) eingeklebt ist.

13. Radsatzführung nach einem der Ansprüche 1 bis 12, **dadurch gekennzeichnet, dass** der Bolzen (8) eine Längsachse (14) und das Radsatzlager (3) eine Radsatzachse (15) aufweist und dass die Längsachse (14) und die Radsatzachse (15) parallel zueinander ausgerichtet sind.

14. Radsatzführung nach einem der Ansprüche 1 bis 13, **dadurch gekennzeichnet, dass** es sich bei dem Federelement (5) um eine Primärfeder des Schienenfahrzeuges handelt.

15. Radsatzführung nach einem der Ansprüche 1 bis 14, **dadurch gekennzeichnet, dass** ein Radsatz (4) in dem Radsatzlager (3) geführt ist.

## Claims

1. Wheelset guide for a rail vehicle,
- having a chassis frame (1) of a bogie, comprising at least one longitudinal support (2),
- having a wheelset bearing (3) for a wheelset (4) of the rail vehicle, said wheelset bearing (3) being connected to the chassis frame (1) in a sprung manner via a spring element (5) and having a rocker (6),
- wherein the rocker (6) is pivotably attached to the chassis frame (1) via an elastic rocker bearing (7) and a pin (8) which passes through the rocker bearing (7), wherein the chassis frame (1) forms a receptacle (9) for the rocker bearing (7), which is configured such that the transfer of force into the chassis frame (1) takes place via the rocker bearing (7) itself and that the rocker bearing (7) is positioned in the receptacle (9), **characterised in that**
a lower flange of the at least one longitudinal support (2) in the region of the receptacle (9) is routed tangentially past the receptacle (9) or flows tangentially into and out of the region,
wherein the longitudinal support (2) has an I-shaped profile.

2. Wheelset guide according to claim 1, **characterised in that** the receptacle (9) at least partly surrounds the rocker bearing (7).

3. Wheelset guide according to claim 1 or 2, **characterised in that** the receptacle (9) is designed as a preferably cylindrical opening in the longitudinal support (2).

4. Wheelset guide according to claim 3, **characterised in that** the transfer of force into the longitudinal support (2) takes place via at least one contact section (10) of the contact surface between rocker bearing (7) and receptacle (9).

5. Wheelset guide according to one of the claims 1 to 4, **characterised in that** the elastic rocker bearing (7) is designed as a rubber-metal bush.

6. Wheelset guide according to one of the claims 1 to 5, **characterised in that** the flow of force from the wheelset bearing (3) into the chassis frame (1) runs via the rocker (6), the pin (8), the rocker bearing (7) and the receptacle (9).

7. Wheelset guide according to claim 6, **characterised in that** the pin (8) has a central section (11) which is held in the rocker bearing (7) and at least one end section (12) for attaching to the rocker (6), wherein the transfer of force from the rocker (6) into the pin (8) takes place via the least one end section (12) of the pin (8) and wherein the transfer of force from the pin (8) into the rocker bearing (7) takes place via the central section (11) of the pin (8).

8. Wheelset guide according to one of the claims 1 to 7, **characterised in that** the rocker (6) has a forked section (13) for receiving two end sections (12) of the pin (8).

9. Wheelset guide according to claim 8, **characterised in that** the end sections (12) of the pin (8) are connected to the forked section (13) of the rocker (6) in a torsionally rigid manner.

10. Wheelset guide according to claim 8 or 9, **characterised in that** the forked end section (13) of the rocker (6) laterally surrounds the chassis frame, preferably the longitudinal support (2), at least partly.

11. Wheelset guide according to one of the claims 1 to 10, **characterised in that** the rocker bearing (7) is pressed into the receptacle (9).

12. Wheelset guide according to one of the claims 1 to 10, **characterised in that** the rocker bearing (7) is glued into the receptacle (9).

13. Wheelset guide according to one of the claims 1 to 12, **characterised in that** the pin (8) has a longitudinal axis (14) and the wheelset bearing (3) a wheelset axis (15), and that the longitudinal axis (14) and the wheelset axis (15) are so arranged as to be parallel to each other.

14. Wheelset guide according to one of the claims 1 to 13, **characterised in that** the spring element (5) is a primary spring of the rail vehicle.

15. Wheelset guide according to one of the claims 1 to 14, **characterised in that** a wheelset (4) is mounted in the wheelset bearing (3).

## Revendications

1. Mécanisme de guidage d'un jeu de roues d'un véhicule ferroviaire,
- comportant un cadre de châssis (1) d'un bogie, comportant au moins un longeron (2),
- comprenant un palier de jeu de roues (3) pour un jeu de roues (4) du véhicule ferroviaire, ledit palier de jeu de roues (3) étant relié élastiquement au cadre de châssis (1) grâce à un élément ressort (5) et présentant un culbuteur (6),
- le culbuteur (6) étant monté rotatif au cadre de châssis (1) via un palier de culbuteur (7) élastique et un boulon (8) traversant le palier de culbuteur (7),
- le cadre de châssis (1) définissant un logement (9) pour le palier de culbuteur (7) qui est conformé de manière que l'introduction de force dans le cadre de châssis (1) se fait via le palier de culbuteur (7) lui-même et que le palier de culbuteur (7) est positionné dans le logement (9), **caractérisé en ce qu'**une membrure inférieure de l'au moins un longeron (2) passe tangentiellement à côté du logement (9) dans la zone du logement (9) respectivement débouche tangentiellement dans ladite zone et en ressort tangentiellement,
le longeron (2) présentant un profil sous forme de I.

2. Mécanisme de guidage d'un jeu de roues selon la revendication 1, **caractérisé en ce que** le logement (9) entoure au moins partiellement le palier de culbuteur (7) .

3. Mécanisme de guidage d'un jeu de roues selon la revendication 1 ou 2, **caractérisé en ce que** le logement (9) est prévu sous forme d'un évidement (2), de préférence cylindrique, ménagé dans le longeron (2).

4. Mécanisme de guidage d'un jeu de roues selon la revendication 3, **caractérisé en ce que** l'introduction de force dans le longeron (2) se fait via au moins un tronçon de contact (10) de la surface de contact entre le palier de culbuteur (7) et le logement (9).

5. Mécanisme de guidage d'un jeu de roues selon l'une des revendications 1 à 4, **caractérisé en ce que** le palier de culbuteur (7) est conçu sous forme d'un coussinet réalisé en caoutchouc et en métal.

6. Mécanisme de guidage d'un jeu de roues selon l'une des revendications 1 à 5, **caractérisé en ce que** la propagation du flux de force depuis le palier de jeu de roues (3) dans le cadre de châssis (1) se fait via le culbuteur (6), le boulon (8), le palier de culbuteur (7) et le logement (9).

7. Mécanisme de guidage d'un jeu de roues selon la revendication 6, **caractérisé en ce que** le boulon (8) comporte une portion centrale (11) prévue d'être abritée par le palier de culbuteur (7) et au moins une portion d'extrémité (12) assurant la communication avec le culbuteur (6), l'introduction de force du culbuteur (6) dans le boulon (8) se faisant via l'au moins une portion d'extrémité (12) du boulon (8), l'introduction de force du boulon (8) dans le palier de culbuteur (7) se faisant via la portion centrale (11) du boulon (8).

8. Mécanisme de guidage d'un jeu de roues selon l'une des revendications 1 à 7, **caractérisé en ce que** le culbuteur (6) présente une portion (13) configurée en fourche pour abriter deux portions d'extrémité (12) du boulon (8).

9. Mécanisme de guidage d'un jeu de roues selon la revendication 8, **caractérisé en ce que** les portions (12) d'extrémité du boulon (8) sont reliées rigides en torsion à la portion configurée en fourche (13) du culbuteur (6).

10. Mécanisme de guidage d'un jeu de roues selon la revendication 8 ou 9, **caractérisé en ce que** la portion d'extrémité configurée en fourche (13) du culbuteur (6) entoure latéralement, au moins en partie, le cadre de châssis, de préférence le longeron (2).

11. Mécanisme de guidage d'un jeu de roues selon l'une des revendications 1 à 10, **caractérisé en ce que** le palier de culbuteur (7) est enfoncé dans le logement (9).

12. Mécanisme de guidage d'un jeu de roues selon l'une des revendications 1 à 10, **caractérisé en ce que** le palier de culbuteur (7) est collé dans le logement (9).

13. Mécanisme de guidage d'un jeu de roues selon l'une des revendications 1 à 12, **caractérisé en ce que** le boulon (8) présente un axe longitudinal (14) et le palier de jeu de roues (3) présente un axe de jeu de roues (15) et **en ce que** l'axe longitudinal (14) et l'axe du jeu de roues (15) sont orientés parallèlement l'un par rapport à l'autre.

14. Mécanisme de guidage d'un jeu de roues selon l'une des revendications 1 à 13, **caractérisé en ce que** l'élément ressort (5) est un ressort primaire du véhicule ferroviaire.

15. Mécanisme de guidage d'un jeu de roues selon l'une des revendications 1 à 14, **caractérisé en ce qu'**un jeu de roues (4) est guidé dans le palier de jeu de roues (3).
